# EUROPÄISCHE PATENTSCHRIFT

(11) **EP 1 159 370 B1**
(45) Veröffentlichungstag und Bekanntmachung des Hinweises auf die Patenterteilung: **23.07.2003**
(21) Anmeldenummer: 00909020.0
(22) Anmeldetag: 10.02.2000
(51) Int. Cl.: C09J 175/04, C09J 201/10

(54) **MEHRKOMPONENTEN BESCHICHTUNGS- UND KLEBSTOFFMATERIAL**
MULTICOMPONENT COATING AND ADHESIVE MATERIAL
MATERIAU DE REVETEMENT ET DE COLLAGE A PLUSIEURS COMPOSANTS

(30) Priorität: 11.02.1999 DE 19905907
(43) Veröffentlichungstag der Anmeldung: 05.12.2001
(73) Patentinhaber: Jowat AG, 32758 Detmold (DE)
(72) Erfinder: TERFLOTH, Christian, D-32760 Detmold (DE); HIPPOLD, Theodor, D-32108 Bad Salzuflen (DE)
(74) Vertreter: Gesthuysen, von Rohr & Eggert
(86) Internationale Anmeldenummer: DE0000384
(87) Internationale Veröffentlichungsnummer: WO00047687

(56) Entgegenhaltungen:
- EP-A- 0 619 343
- WO-A-93/25599
- DE-A- 19 624 236
- GB-A- 2 201 677
- US-A- 5 155 180
- US-A- 5 441 808

## Beschreibung

Reaktive, lösungsmittelfreie und mit der Luftfeuchtigkeit vernetzende Klebstoffe, insbesondere Schmelzklebstoffe, sind im Stand der Technik gut bekannt. Solche Klebstoffe werden aus OH-gruppenhaltigen, niedrigmolekularen Ausgangsmaterialien hergestellt, wie Polyester oder Polyether, die dann mit einem stöchiometrischen Überschuß an Isocyanaten zu reaktiven isocyanatterminierten Klebstoffen umgesetzt werden. Als Isocyanatkomponente können 4,4'-Diisocyanato-diphenylmethan (MDI), 1,5-Diisocyanatonaphthalin (NDI), 1,6-diisocyanato-hexan (HDI), 2,4-Diisocyanato-toluol (TDI), 1-Isocyanato-3-isocyanatomethyl-3,5,5-trimethyl-cyclohexan (IPDI) oder deren Prepolymere verwendet werden.

Alternativ können die in Rede stehenden reaktiven Beschichtungs- und Klebstoffmaterialien auch auf Basis silanfunktionalisierter Polymere erstellt werden. Die Zugabe von Katalysatoren, Harzen sowie weiteren Zuschlags- und Hilfsstoffen ist üblich.

In Abhängigkeit von obigen Ausgangsmaterialien und deren mittleren Molekulargewichten sowie von den gewünschten Eigenschaften des herzustellenden Klebstoffes kann die zugrundeliegende Polyadditionsreaktion mehrere Stunden betragen. Zwei oder mehrere Klebstoffkomponenten werden zusammengebracht und unter Hitzeeinwirkung zu einer heißen, flüssigen Masse verarbeitet, die in diesem Zustand als Schmelzklebstoff verwendet werden kann. Unter Aufnahme von Feuchtigkeit aus der Luft und/oder von einer benetzten Oberfläche erfolgt die Vernetzungsreaktion. Dies bedeutet, daß der Schmelzklebstoff nach der Herstellung trocken unter Ausschluß von Luftfeuchtigkeit aufbewahrt werden muß.

Zum Transport und zur Aufbewahrung wird solch ein Klebstoff deshalb in dicht verschließbaren Behältern, z.B. Weißblechgebinden mit 20 oder 200 1 Inhalt, eingefüllt und dort trocken unter Ausschluß jeglicher Feuchtigkeit aufbewahrt. Vor Anwendung muß der abgekühlte und regelmäßig feste Klebstoff aus diesen Behältern herausgeschmolzen und den Verarbeitungsstellen und Auftragseinheiten zugeführt werden. Das Abschmelzen erfolgt z.B. mittels eines Faßschmelzers, dessen beheizter, mit Dichtringen versehener Stempel in einen mit Klebstoff gefüllten Behälter unter Druck eingebracht wird. Mittels einer im Stempel installierten Zahnradpumpe wird der geschmolzene, zähe bis flüssige Schmelzklebstoff durch beheizte Schläuche einer Auftragseinheit zugeführt. Die Aufschmelzleistung derartiger Faßschmelzer liegt je nach Größe der Behälter und der Klebstoff-Formulierung in der Größenordnung von 20-80 kg/Stunde.

Diese Aufschmelzleistung ist bei einigen Anwendungsbereichen, insbesondere bei einer flächigen Beschichtung, nicht ausreichend. Darüberhinaus ist bei der Verwendung von relativ kleinen Gebinden eine weitestgehend kontinuierliche Arbeit aufgrund häufiger Wechsel derselben nicht möglich. Die Anschaffung eines Faßschmelzers durch den Anwender des Schmelzklebstoffes bedeutet weiter eine nicht unbeträchtliche Investition. Falls beim Transport die den Schmelzklebstoff enthaltenden Behälter undicht werden, kann der Klebstoff schnell unbrauchbar werden, insbesondere wenn er Feuchtigkeit ausgesetzt ist. Nachteilig ist ferner, daß nach öffnen der Behälter der Klebstoff vollständig und relativ zügig verarbeitet werden muß, da derartige Klebstoffreste relativ schnell unbrauchbar werden.

Als weiterer Nachteil des oben beschriebenen Standes der Technik ist die Beschränkung anzusehen, daß der Einsatz derartiger Systeme ausschließlich auf reaktive Klebstoffe limitiert ist. Die wechselweise Verarbeitung von reaktiven und thermoplastischen Klebstoffen (auf Basis von EVA, APAO oder PA) ist sowohl aus ökonomischen als auch aus technischen Gründen nachteilig.

Es ist die Verwendung von Mehrkomponentensystemen bei der Herstellung von Schmelzkleb- und Beschichtungsstoffen grundsätzlich bekannt. Den in der EP 0 304 026 B1, im Handbook of adhesives, 2^{nd} Edition, S. 581 ff und im The ICI polyurethanes book, 2^{nd} Edition, S. 93 ff offenbarten Systemen ist gemeinsam, daß die Komponenten ausschließlich miteinander reagieren und nach erfolgter Reaktion keinerlei Reaktivität für Folgereaktionen bspw. mit Feuchtigkeit mehr aufweisen. Auch erfolgt nach Vermischen der Komponenten notwendigerweise deren unmittelbare Weiterverwendung.

Diese vorgegebene technische Problematik wird durch die Gegenstände der Ansprüche gelöst, wobei gem. Anspruch 14 darauf abgestellt wird, daß eine kontinuierliche Herstellung des isocyanatterminierten Beschichtungs- und Klebstoffmaterials nach der Erfindung, beispielsweise gerade auch am Ort der Anwendung erfolgt durch Vermischen der einzelnen Komponenten, deren Erwärmung unter weiterer Vermischung bis in einen flüssigen Zustand, in welchem dann das Material als reaktives Beschichtungs- und Klebstoffmaterial zur Verfügung steht. Weiter ist bei dem isocyanatterminierten Beschichtungs- und Klebstoffmaterial vorgesehen, daß wenigstens eine Komponente wenigstens ein höhermolekulares, isocyanat- reaktives Ausgangspolymer mit einer Molmasse von mehr als 8.000 g/mol und eine zweite Komponente einen reaktiven, isocyanatterminierten Vernetzer umfasst und zudem ein nicht-reaktives Polymer, ausgewählt aus der gruppe der Ethylen/Vinylacetat- Copolymeren und/oder Polyolefinen, enthalt.

Bei dem Verfahren nach der Erfindung wird zur Herstellung eines zwei- oder mehrkomponentigen Schmelzklebstoffes eine erste und zumindest eine zweite Klebstoffkomponente bspw. in einen Schneckenförderer für ein Vermischen und Erwärmen eingebracht. Dort werden die Komponenten geschmolzen und vermischt, wodurch bei Anlegen geeigneter, vom gewünschten Beschichtungs- oder Klebstoff und der Zusammensetzung der Komponenten abhängiger Verfahrensparameter, wie Temperatur, Druck, Schneckenlänge etc. ein Beschichtungs- und/oder ein Klebstoff entsteht, der sogleich weiter verarbeitet und insbesondere sogleich seiner Verwendung, bevorzugt einer Beschichtung, zugeführt werden kann.

Im Gegensatz zu dem bekannten Verfahren, bei dem der Ort der Herstellung und der Anwendung des Klebstoffes unterschiedlich sind und somit ein Transport mit den geschilderten Nachteilen notwendig ist, erfolgt die Herstellung des Beschichtungs- und Klebstoffes vor Ort beim Anwender, der bspw. über einen geeigneten Schneckenförderer verfügt, was ökonomisch wie technisch vorteilhaft ist. Es kann gezielt die Menge an Klebstoff hergestellt werden, die tatsächlich gebraucht wird, und dies in einem kontinuierlichen Verfahren. Die Nachteile beim Transport oder nach dem Öffnen der Behälter gemäß dem oben geschilderten Stand der Technik ergeben sich somit bei der Erfindung nicht.

Nach der Erfindung ist eine Isocyanat-Terminierung des Klebstoffes vorgesehen, insbesondere eine, bei welcher die erste Komponente zumindest ein höhermolekulares, isocyanat- reaktives Ausgangspolymer der genannten Molmasse und die zweite Komponente einen reaktiven isocyanatterminierten Vernetzer

Die erste und zweite Klebstoffkomponente können getrennt aufbewahrt werden, wodurch sich entsprechend problemlose Aufbewahrungs- und Transportmöglichkeiten sowie lange Aufbewahrungszeiten ergeben. Gemäß einer Ausgestaltung der Erfindung können beide Komponenten vorteilhafterweise als Granulat vorliegen, wobei jedoch auch flüssige Aufbewahrungsoder Transportformen grundsätzlich möglich sind.

Mit einem Schneckenförderer können ferner ohne weiteres ausreichend hohe Aufschmelzleistungen von mehr als 100 kg/Stunde bzw. große Bereitstellungsmengen an Beschichtungs- bzw. Klebstoffmaterial erzielt werden. Solch ein Schneckenförderer ist z.B. als Einschnecken-Extruder grundsätzlich bekannt.

Alle Einstellungen an dem Schneckenförderer, wie Temperatur, Druck, Durchsatzzeit etc. werden in Abhängigkeit vom herzustellenden Beschichtungs- und Klebstoffmaterial und damit von den Zusammensetzungen der Komponenten bestimmt und eingestellt. Für die Erhitzung der Komponenten dürfte der entlang der Förderstrecke herrschende Druck ausreichen, wobei jedoch auch zusätzliche Heizquelle vorgesehen werden können, so daß Temperaturen von um 200°C leicht auch auf kurzem Förderweg erreicht werden können.

An den Schneckenförderer am Ende der Förderstrecke kann auch eine, ggf. beheizbare Leitung angeschlossen werden, die den hergestellten Schmelzklebstoff in flüssiger Form direkt an den Verarbeitungsort führt. In vorteilhafter Weise wird nur dann der Beschichtungs- bzw. Klebstoff nach der Erfindung hergestellt, wenn ein entsprechender Bedarf besteht. Nach Anwendung des Beschichtungs- bzw. Klebstoffes ist eine Reinigung aller mit dem erfindungsgemäßen Material in Kontakt gebrachten Vorrichtungen insoweit einfach, als durch den Schneckenförderer, die entsprechenden Leitungen und sonstigen Anlagen nur eine der Klebstoffkomponenten, insbesondere die vernetzerfreie Klebstoffkomponente, geführt wird, wodurch eine Reinigung und Spülung erzielt wird.

Daneben kann es sich als zweckmäßig erweisen, den in vergleichsweise großen Mengen hergestellten Klebstoff über Zwischenbehälter der Verarbeitung zuzuführen. Hierdurch kann eine Pufferfunktion bei der Herstellung des Klebstoffes erreicht werden und/oder eine Anpassung an örtliche Vorgaben.

Bei der Erfindung weist die erste Klebstoffkomponente zumindest ein gegenüber Isocyanaten reaktives Polymer und/oder eine Harzkomponente sowie ein nicht-reaktives Polymer auf. Es werden gegenüber Isocyanat reaktive Polymere mit mittleren Molekulargewichten von mehr als 8.000 g/mol verwende. Solche höhermolekularen Komponenten, insbesondere mit mittleren Molekulargewichten von 10.000 bis 30.000 g/mol, z.B. Polyester, Polycaprolactonpolyester, Polyether, Polyurethane, Polyamide oder Polytetrahydrofurane, die mindestens zwei reaktive Gruppen pro Molekül mit reaktiven Wasserstoffatomen aufweisen, sind in der Lage, mit Isocyanaten zu reagieren. Die Verwendung von solchen reaktiven Polymeren in Mengen von 20-100 Gew.%, insbesondere in Mengen von 50-95 Gew.%, in der ersten Klebstoffkomponente ist ferner bevorzugt.

Die Harze, wie beispielsweise aliphatische, cyclische oder cycloaliphatische Kohlenwasserstoff-Harze, Terpenphenolharze, Cumaron-Indenharze, α-Methylstyrolharze, polymerisierte Tallharzester oder Ketonaldehydharze, die in der ersten Klebstoffkomponente eingesetzt werden können, sind nicht besonders limitiert. Harze mit niedrigen Säurezahlen, insbesondere mit Werten kleiner 1 mg KOH/g, werden jedoch bevorzugt verwendet. Die Anteile des oder der Harze in der ersten Klebstoffkomponente können z.B. bevorzugt bei 5 bis 35 Gew.% liegen und grundsätzlich zwischen 0 und 70 Gew.%.

Die erste Klebstoffkomponente enthält ferner ein nicht-reaktives Polymer, wobei bei der Verwendung von Ethylen/Vinylacetat-Copolymeren solche Polymere bevorzugt sind, die Vinylacetat-Gehalte von 12 bis 40 %, insbesondere 18 bis 28 %, und Schmelzindices (DIN 53735) von 8 bis 800, insbesondere von 150 bis 500 aufweisen. Es können aber durchaus in vorteilhafterweise Weise auch Polyolefine verwendet werden. Polyolefine mit mittleren Molekulargewichten Mₙ von 5.000 bis 25.000 g/mol, insbesondere von 10.000 bis 20.000 g/mol, sowie mit Erweichungsbereichen nach Ring und Kugel zwischen 80 und 170° C, insbesondere zwischen 80 und 130° C, sind bei dem Verfahren nach der Erfindung einsetzbar. Die Anteile des oder der nicht-reaktiven Polymere sind in der ersten Klebstoffkomponente nicht besonders kritisch und werden je nach gewünschtem Beschichtungs- bzw. Klebstoff gewählt. Es können z.B. 5 bis 35 Gew.% nicht-reaktive Polymere in der ersten Klebstoffkomponente vorliegen.

Die zweite Klebstoffkomponente umfaßt nach der Erfindung zumindest eine reaktive Vernetzerkomponente, die zumindest ein bei Raumtemperatur festes Isocyanat darstellt.

Als besonders vorteilhaft haben sich folgende isocyanatterminierte Vernetzer herausgestellt: 4,4'-Diisocyanato-diphenylmethan (MDI), 4,4',4''-Triisocyanato-triphenylmethan, Tris(4-isocyanatophenyl)-thiophosphat, 1,5-Diisocyanato-naphthalin (NDI) oder Isomere davon, Dimerisate von 2,4-Diisocyanato-toluol (TDI) und 1-Isocyanato-3-isocyanatomethyl-3,5,5-trimethyl-cyclohexan (IPDI) oder deren Hydrierungsprodukte, und Trimerisate von 1-Isocyanato-3-isocyanatomethyl-3,5,5-trimethyl-cyclohexan (IPDI).

Bei der Erfindung können die Klebstoffkomponenten weitere verschiedene, für reaktive Klebstoffe aber grundsätzlich bekannte Zusätze enthalten, wie Weichmacher, z.B. Weichmacher auf Phthalsäure oder Phosphorsäureesterbasis, Glycolacetat, hochsiedende organische Öle, Ester oder andere der Plastifizierung behilfliche Additive, Stabilisatoren, Antioxidantien, Säurefänger und/oder Alterungsschutzmittel. Diese fakultativ enthaltenen Bestandteile des Klebstoffes werden je nach Anwendungsbereich des fertigen Klebstoffes ausgewählt. Dies ist eine für den Fachmann auf diesem Gebiet bekannte Vorgehensweise.

Die mit dem Verfahren nach der Erfindung hergestellten Beschichtungsmaterialien bzw. Klebstoffe nach der Erfindung eignen sich beispielsweise für die Verklebung von Schaumpolstern, Polstermöbel und Matratzen oder können für kontinuierliche Beschichtungszwecke, wie Profilummantelung, eingesetzt werden. Die Aufbringung kann mit bekannten Verfahren erfolgen, z.B. per Sprüh-, Spritz-, Düsen- oder Walzenauftrag.

Ausführungsbeispiele für das Verfahren nach der Erfindung und den dabei einzusetzenden Klebstoffkomponenten werden nachfolgend erläutert.

### Beispiel 1

### Isocyanatterminierter Klebstoff

Es wurde eine erste Klebstoffkomponente in Form eines thermoplastischen Granulates mit folgender Zusammensetzung hergestellt:
- Polyester mit einem mittleren Molekulargewicht von ca. 20.000 g/mol und einer OH-Zahl von 5: 60 Gew.%
- Ethylen/Vinylacetat-Copolymer mit einem VA-Gehalt von 18 % und einem Schmelzindex von ca. 150: 20 Gew.%
- niedrigmolekulares aromatisches Kohlenwasserstoff-Harz mit einem Erweichungsbereich von 75-85° C und einer Säurezahl von kleiner 1 mg KOH/g: 20 Gew.%

Es wurde eine zweite Klebstoffkomponente in Form eines thermoplastischen Granulates mit folgender Zusammensetzung hergestellt:

Polyisocyanat auf Basis des cycloaliphatischen 1-Isocyanato-3-isocyanatomethyl-3,5,5-trimethyl-cyclohexan (IPDI) mit einem Isocyanatgehalt von 17 % und einer Funktionalität zwischen 3 und 4.

Die erste Klebstoffkomponente wurde über eine erste Zuführvorrichtung eines auf 200°C beheizten Einschneckenextruders der Förderschnecke des Extruders zugeführt, während die zweite Klebstoffkomponente über eine zweite Zuführvorrichtung dosiert zugeführt wurde mit einem Mischungsverhältnis von 7:1. Die Aufschmelzleistung betrug 120 kg/Stunde.

Es wurde ein isocyanatterminierter reaktiver Schmelzklebstoff erhalten, mit dem es möglich war, auf bekannten Profilummantelungsanlagen mit Furnier, dekorativen Papieroder Kunststoff-Folien, im Kern aus MDF oder Spanplatte bestehende Profile herzustellen.

## Patentansprüche

1. Reaktives isocyanatterminiertes Mehrkomponenten-Beschichtungsund/oder -Klebstoffmaterial, das
(a) als erste Komponente ein isocyanatreaktives Ausgangspolymer mit einer Molmasse von mehr als 8.000 g/mol und
(b) als zweite Komponente einen reaktiven isocyanatterminierten Vernetzer,
umfaßt,
wobei es außerdem ein nicht-isocyanatreaktives Polymer, ausgewählt aus der Gruppe von Ethylen/Vinylacetat-Copolymeren und/oder Polyolefinen, enthält.

2. Mehrkomponenten-Beschichtungs- und/oder -Klebstoffmaterial nach Anspruch 1, **dadurch gekennzeichnet, daß** die Ethylen/Vinylacetat-Copolymere einen Vinylacetat-Gehalt zwischen 12 und 40 %, insbesondere zwischen 18 und 28 %, und Schmelzindices zwischen 8 und 800, insbesondere zwischen 150 und 500, aufweisen.

3. Mehrkomponenten-Beschichtungs- und/oder -Klebstoffmaterial nach Anspruch 1, **dadurch gekennzeichnet, daß** die Polyolefine mittlere Molekulargewichte Mₙ zwischen 5.000 und 25.000 g/mol, insbesondere zwischen 10.000 und 20.000 g/mol, und Erweichungsbereiche zwischen 80 und 170 °C, insbesondere zwischen 80 und 130 °C, aufweisen.

4. Mehrkomponenten-Beschichtungs- und/oder -Klebstoffmaterial nach einem der vorhergehenden Ansprüche, **dadurch gekennzeichnet, daß** der Gehalt an nicht-isocyanatreaktivem Polymer in der ersten Komponente 5 bis 35 Gew.-% beträgt.

5. Mehrkomponenten-Beschichtungs- und/oder -Klebstoffmaterial nach einem der vorhergehenden Ansprüche, **dadurch gekennzeichnet, daß** die reaktive Vemetzerkomponente ein bei Raumtemperatur festes Isocyanat enthält, insbesondere wobei das bei Raumtemperatur feste Isocyanat ausgewählt ist aus der Gruppe von 4,4'-Diisocyanato-diphenylmethan (MDI), 4,4',4"-Triisocyanato-triphenylmethan, Tris-(4-isocyanatophenyl)-thiophosphat, 1,5-Diisocyanato-naphtalin (NDI) und/oder deren Isomeren, den Dimerisaten von 2,4-Düsocyanato-toluol (TDI) und/oder von 1-Isocyanato-3-isocyanatomethyl-3,5,5-trimethylcyclohexan (IPDI) und/oder deren Hydrierungsprodukten und/oder den Trimerisaten von 1-Isocyanato-3-isocyanatomethyl-3,5,5-trimethylcyclohexan (IPDI).

6. Mehrkomponenten-Beschichtungs- und/oder -Klebstoffmaterial nach einem der vorhergehenden Ansprüche, **dadurch gekennzeichnet, daß** das isocyanatreaktive Ausgangspolymer ein mittleres Molekulargewicht zwischen 8000 und 50.000 g/mol, insbesondere zwischen 10.000 und 30.000 g/mol, aufweist, insbesondere wobei das isocyanatreaktive Ausgangspolymer vorzugsweise aus der Gruppe von Polyestern, Polycaprolactonpolyestern, Polyethern, Polyurethanen, Polyamiden und Polytetrahydrofuranen ausgewählt ist und/oder vorzugsweise mindestens zwei reaktive Gruppen pro Molekül mit reaktiven Wasserstoffatomen aufweist

7. Mehrkomponenten-Beschichtungs- und/oder -Klebstoffmaterial nach einem der vorhergehenden Ansprüche, **dadurch gekennzeichnet, daß** der Anteil an isocyanatreaktivem Ausgangspolymer in der ersten Komponente 20 bis 100 Gew.-%, insbesondere 50 bis 95 Gew.-%, ausmacht.

8. Mehrkomponenten-Beschichtungs- und/oder -Klebstoffmaterial nach einem der vorhergehenden Ansprüche, **dadurch gekennzeichnet, daß** mindestens eine Klebstoffkomponente als Granulat vorliegt.

9. Mehrkomponenten-Beschichtungs- und/oder -Klebstoffmaterial nach einem der vorhergehenden Ansprüche, **dadurch gekennzeichnet, daß** eine oder mehrere der Komponenten mindestens ein Harz aufweisen, insbesondere wobei das Harz aus der Gruppe der aliphatischen, cyclischen oder cycloaliphatischen Kohlenwasserstoff-Harze, der Terpenphenolharze, der Cumaron-Indenharze, der α-Methylstyrolharze, der polymerisierten Tallharzester und der Ketonaldehydharze ausgewählt ist und/oder insbesondere wobei das Harz ein Harz mit niedriger Säurezahl mit Werten kleiner als 1 mg KOH/g ist und/oder insbesondere
wobei der Anteil an Harz an einer oder mehreren Komponenten jeweils 0 bis 70 Gew.-%, vorzugsweise 5 bis 35 Gew.-%, beträgt.

10. Mehrkomponenten-Beschichtungs- und/oder -Klebstoffmaterial nach einem der vorhergehenden Ansprüche, **dadurch gekennzeichnet, daß** das Mischungsverhältnis der ersten und der zweiten Komponente zwischen 20: 1 un 1 : 20 liegt.

11. Mehrkomponenten-Beschichtungs- und/oder -Klebstoffmaterial nach einem der vorhergehenden Ansprüche, **dadurch gekennzeichnet, daß** mindestens eine der Komponenten mindestens einen weiteren, für reaktive Klebstoffe an sich bekannten Zusatz enthält, insbesondere Weichmacher, wie Weichmacher auf Phthalsäure- oder Phosphorsäureesterbasis, Glykolacetat, hochsiedende organische Öle, Ester oder andere der Plastizifizierung dienende Additive, Stabilisatoren, Antioxidantien, Säurefänger und/oder Alterungsschutzmittel.

12. Reaktives isocyanatterminiertes Mehrkomponenten-Beschichtungsund/oder -Klebstoffmaterial, enthaltend ein isocyanatreaktives Ausgangspolymer mit einer Molmasse von mehr als 8.000 g/mol, einen reaktiven isocyanatterminierten Vernetzer und ein nicht-isocyanatreaktives Polymer, ausgewählt aus der Gruppe von Ethylen/Vinylacetat-Copolymeren und/oder Polyolefinen.

13. Mehrkomponenten-Beschichtungs- und/oder -Klebstoffmaterial nach Anspruch 12, **dadurch gekennzeichnet, daß** es feuchtigkeitsreaktiv ist.

14. Verfahren zur Herstellung eines reaktiven isocyanatterminierten Mehrkomponenten-Beschichtungs- und/oder -Klebstoffmaterial, insbesondere nach den Ansprüchen 1 bis 13,
**dadurch gekennzeichnet, daß**
das reaktive Mehrkomponenten-Beschichtungs- und/oder -Klebstoffmaterial kontinuierlich durch Vermischung der einzelnen Komponenten und deren Erwärmung unter weiterer Vermischung bis in einen flüssigen Zustand hergestellt wird,
wobei
(a) eine erste Komponente ein isocyanatreaktives Ausgangspolymer mit einer Molmasse von mehr als 8.000 g/mol und
(b) eine zweite Komponente einen reaktiven isocyanatterminierten Vernetzer
umfaßt und das Mehrkomponenten-Beschichtungs- und/oder -Klebstoffmaterial außerdem ein nicht-isocyanatreaktives Polymer, ausgewählt aus der Gruppe von Ethylen/Vinylacetat-Copolymeren und/oder Polyolefinen, enthält,
und das resultierende reaktive Mehrkomponenten-Beschichtungsund/oder -Klebstoffmaterial unmittelbar nach seiner Herstellung, gegebenenfalls über Zwischenbehälter, einer Profilummantelungsanlage oder einer Beschichtungsanlage zur Verwendung zugeführt wird.

15. Verfahren zur Herstellung eines reaktiven isocyanatterminierten Mehrkomponenten-Beschichtungs- und/oder -Klebstoffmaterial, insbesondere nach den Ansprüchen 1 bis 13,
**dadurch gekennzeichnet, daß**
das reaktive Mehrkomponenten-Beschichtungs- und/oder -Klebstoffmaterial kontinuierlich durch Vermischung der einzelnen Komponenten und deren Erwärmung unter weiterer Vermischung bis in einen flüssigen Zustand hergestellt wird,
wobei
(a) eine erste Komponente ein isocyanatreaktives Ausgangspolymer mit einer Molmasse von mehr als 8.000 g/mol und
(b) eine zweite Komponente einen reaktiven isocyanatterminierten Vernetzer
umfaßt und das Mehrkomponenten-Beschichtungs- und/oder -Klebstoffmaterial außerdem ein nicht-isocyanatreaktives Polymer, ausgewählt aus der Gruppe von Ethylen/Vinylacetat-Copolymeren und/oder Polyolefinen, enthält,
und das resultierende reaktive Mehrkomponenten-Beschichtungsund/oder -Klebstoffmaterial unmittelbar nach seiner Herstellung, gegebenenfalls über Zwischenbehälter, durch Sprüh-, Spritz-, Düsen- oder Walzenauftrag aufgebracht wird.

16. Verfahren nach einem der vorhergehenden Ansprüche, **dadurch gekennzeichnet, daß** der Gehalt an nicht-isocyanatreaktivem Polymer in der ersten Komponente vorzugsweise 5 bis 35 Gew.-% beträgt.

17. Verfahren nach einem der vorhergehenden Ansprüche, **dadurch gekennzeichnet, daß** die Ethylen/Vinylacetat-Copolymere einen Vinylacetat-Gehalt zwischen 12 und 40 %, insbesondere zwischen 18 und 28 %, und Schmelzindices zwischen 8 und 800, insbesondere zwischen 150 und 500, aufweisen.

18. Verfahren nach einem der vorhergehenden Ansprüche, **dadurch gekennzeichnet, daß** die Polyolefine mittlere Molekulargewichte Mₙ zwischen 5.000 und 25.000 g/mol, insbesondere zwischen 10.000 und 20.000 g/mol, und Erweichungsbereiche zwischen 80 und 170°C, insbesondere zwischen 80 und 130 °C, aufweisen.

19. Verfahren nach einem der vorhergehenden Ansprüche, **dadurch gekennzeichnet, daß** die reaktive Vernetzerkomponente ein bei Raumtemperatur festes Isocyanat enthält und/oder insbesondere ausgewählt ist aus der Gruppe von 4,4'-Diisocyanato-diphenylmethan (MDI), 4,4',4"-Triisocyanato-triphenylmethan, Tris-(4-isocyanatophenyl)-thiophosphat, 1,5-Diisocyanato-naphtalin (NDI) und/oder deren Isomeren, den Dimerisaten von 2,4-Diisocyanato-toluol (TDI) und/oder von l-Isocyanato-3-isocyanatomethyl-3,5,5-trimethyl-cyclohexan (IPDI) und/oder deren Hydrierungsprodukten und/oder den Trimerisaten von 1-Isocyanato-3-isocyanatomethyl-3,5,5-trimethyl-cyclohexan (IPDI).

20. Verfahren nach einem der vorhergehenden Ansprüche, **dadurch gekennzeichnet, daß** das isocyanatreaktive Ausgangspolymer ein mittleres Molekulargewicht zwischen 8000 und 50.000 g/mol, insbesondere zwischen 10.000 und 30.000 g/mol, aufweist, insbesondere wobei das isocyanatreaktive Ausgangspolymer vorzugsweise aus der Gruppe von Polyestern, Polycaprolactonpolyestern, Polyethern, Polyurethanen, Polyamiden und Polytetrahydrofuranen ausgewählt ist und/oder vorzugsweise mindestens zwei reaktive Gruppen pro Molekül mit reaktiven Wässerstoffatomen aufweist

21. Verfahren nach einem der vorhergehenden Ansprüche, **dadurch gekennzeichnet, daß** der Anteil an isocyanatreaktivem Ausgangspolymer in der ersten Komponente 20 bis 100 Gew.-%, insbesondere 50 bis 95 Gew.-%, ausmacht.

22. Verfahren nach einem der vorhergehenden Ansprüche, **dadurch gekennzeichnet, daß** mindestens eine Klebstoffkomponente als Granulat vorliegt.

23. Verfahren nach einem der vorhergehenden Ansprüche, **dadurch gekennzeichnet, daß** eine oder mehrere der Komponenten mindestens ein Harz aufweisen, insbesondere wobei das Harz vorzugsweise aus der Gruppe der aliphatischen, cyclischen oder cycloaliphatischen Kohlenwasserstoff-Harze, der Terpenphenolharze, der Cumaron-Indenharze, der α-Methylstyrolharze, der polymerisierten Tallharzester und/oder der Ketonaldehydharze ausgewählt ist und/oder insbesondere wobei das Harz vorzugsweise ein Harz mit niedriger Säurezahl mit Werten kleiner als 1 mg KOH/g ist und/oder insbesondere wobei der Anteil an Harz an einer oder mehreren Komponenten jeweils 0 bis 70 Gew.-%, vorzugsweise 5 bis 35 Gew.-%, beträgt.

24. Verfahren nach einem der vorhergehenden Ansprüche, **gekennzeichnet durch** ein Mischungsverhältnis der ersten und der zweiten Komponente zwischen 20 : 1 und 1 : 20.

25. Verwendung eines reaktiven isocyanatterminierten Mehrkomponenten-Beschichtungs- und/oder -Klebstoffmaterials nach den Ansprüchen 1 bis 13 zum Verkleben insbesondere von Schaumpolstern, Polstermöbeln und Matratzen oder für kontinuierliche Beschichtungszwecke wie Profilummantelung, wobei die Aufbringung insbesondere durch Sprüh-, Spritz-, Düsen- oder Walzenauftrag erfolgt.

## Claims

1. A reactive, isocyanate-terminated multicomponent coating and/or adhesive material comprising
(a) an isocyanate-reactive starting polymer with a molar mass of more than 8,000 g/mol as a first component and
(b) a reactive, isocyanate-terminated cross-linking agent as a second component,
wherein it also contains a non-isocyanate-reactive polymer selected from the group of ethylene-vinyl acetate copolymers and/or polyolefins.

2. A multicomponent coating and/or adhesive material according to claim 1, **characterised in that** the ethylene-vinyl acetate copolymers have a vinyl acetate content of between 12% and 40%, in particular between 18% and 28%, and melt indices of between 8 and 800, in particular between 150 and 50b.

3. A multicomponent coating and/or adhesive material according to claim 1, **characterised in that** the polyolefins have average molecular weights Mₙ of between 5,000 and 25,000 g/mol, in particular between 10,000 and 20,000 g/mol, and softening ranges of between 80°C and 170°C, in particular between 80°C and 130°C.

4. A multicomponent coating and/or adhesive material according to any one of the preceding claims, **characterised in that** the content of non-isocyanate-rcactive polymer in the first component is 5 to 35 wt.%.

5. A multicomponent coating and/or adhesive material according to any one of the preceding claims, **characterised in that** the reactive cross-linking component contains an isocyanate which is solid at room temperature, in particular wherein the isocyanate which is solid at room temperature is selected from the group of diphenylmethane-4,4'-diisocyanate (MDI), triphenylmethane-4,4',4"-triisocyanate, tris(4-isocyanatophenyl) thiophosphate, 1,5-naphthalene diisocyanate (NDI) and/or their isomers, the dimers of 2,4-toluene diisocyanate (TDI) and/or of 1-isocyanato-3-isocyanatomethyl-3,5,5-trimethylcyclohexane (IPDI) and/or their hydrogenation products and/or the trimers of 1-isocyanato-3-isocyanatomethyl-3,5,5-trimethylcyclohexane (IPDI).

6. A multicomponent coating and/or adhesive material according to any one of the preceding claims, **characterised in that** the isocyanate-reactive starting polymer has an average molecular weight of between 8,000 and 50,000 g/mol, in particular between 10,000 and 30,000 g/mol, in particular wherein the isocyanate-reactive starting polymer is preferably selected from the group of polyesters, polycaprolactone polyesters, polyethers, polyurethanes, polyamides and polytetrahydrofurans and/or preferably has at least two reactive groups per molecule with reactive hydrogen atoms.

7. A multicomponent coating and/or adhesive material according to any one of the preceding claims, **characterised in that** the proportion of isocyanate-reactive starting polymer in the first component is 20 to 100 wt.%, in particular 50 to 95 wt.%.

8. A multicomponent coating and/or adhesive material according to any one of the preceding claims, **characterised in that** at least one adhesive component is present as a granulate.

9. A multicomponent coating and/or adhesive material according to any one of the preceding claims, **characterised in that** one or more of the components contains at least one resin, in particular
wherein the resin is selected from the group of the aliphatic, cyclic or cycloaliphatic hydrocarbon resins, the terpene phenolic resins, the coumarone-indene resins, the α-methylstyrene resins, the polymerised tall resin esters and the ketone-aldehyde resins and/or in particular wherein the resin is a resin with a low acid number with values of less than 1 mg KOH/g and/or in particular
wherein the proportion of resin in each of one or more components is 0 to 70 wt.%, preferably 5 to 35 wt.%.

10. A multicomponent coating and/or adhesive material according to any one of the preceding claims, **characterised in that** the mixing ratio of the first and second components lies between 20:1 and 1:20.

11. A multicomponent coating and/or adhesive material according to any one of the preceding claims, **characterised in that** at least one of the components contains at least one further additive known *per* se for reactive adhesives, in particular plasticisers, such as plasticisers based on phthalic acid or phosphoric acid esters, glycol acetate, high-boiling organic oils, esters or other plasticising additives, stabilisers, antioxidants, acid scavengers and/or anti-ageing agents.

12. A reactive, isocyanate-terminated multicomponent coating and/or adhesive material containing an isocyanate-reactive starting polymer with a molar mass of more than 8,000 g/mol, a reactive, isocyanate-terminated cross-linking agent and a non-isocyanate-reactive polymer selected from the group of ethylene-vinyl acetate copolymers and/or polyolefins.

13. A multicomponent coating and/or adhesive material according to claim 12, **characterised in that** it is moisture-reactive.

14. A process for the preparation of a reactive, isocyanate-terminated multicomponent coating and/or adhesive material, in particular according to claims 1 to 13, **characterised in that** the reactive multicomponent coating and/or adhesive material is prepared continuously by mixing the individual components and heating them, still stirring, until they are in a liquid state,
wherein
(a) a first component comprises an isocyanate-reactive starting polymer with a molar mass of more than 8,000 g/mol and
(b) a send component comprises a reactive, isocyanate-terminated cross-linking agent
and the multicomponent coating and/or adhesive material also contains a non-isocyanate-reactive polymer selected from the group of ethylene-vinyl acetate copolymers and/or polyolefins, and the resulting reactive multicomponent coating and/or adhesive material is supplied for use immediately after its preparation, optionally via intermediate containers, a profile wrapping installation or a coating installation.

15. A process for the preparation of a reactive, isocyanate-terminated multicomponent coating and/or adhesive material, in particular according to claims 1 to 13, **characterised in that** the reactive multicomponent coating and/or adhesive material is prepared continuously by mixing the individual components and heating them, still stirring, until they are in a liquid state,
wherein
(a) a first component comprises an isocyanate-reactive starting polymer with a molar mass of more than 8,000 g/mol and
(b) a second component comprises a reactive, isocyanate-terminated cross-linking agent
and the multicomponent coating and/or adhesive material also contains a non-isocyanate-reactive polymer selected from the group of ethylene-vinyl acetate copolymers and/or polyolefins,
and the resulting reactive multicomponent coating and/or adhesive material is applied by spraying, injection, nozzles or rollers immediately after its preparation, optionally via intermediate containers.

16. A process according to either one of the preceding claims, **characterised in that** the content of non-isocyanate-reactive polymer in the first component is preferably 5 to 35 wt.%.

17. A process according to any one of the preceding claims, **characterised in that** the ethylene-vinyl acetate copolymers have a vinyl acetate content of between 12% and 40%, in particular between 18% and 28%, and melt indices of between 8 and 800, in particular between 150 and 500.

18. A process according to any one of the preceding claims, **characterised in that** the polyolefins have average molecular weights Mₙ of between 5,000 and 25,000 g/mol, in particular between 10,000 and 20,000 g/mol, and softening ranges of between 80°C and 170°C, in particular between 80°C and 130°C.

19. A process according to any one of the preceding claims, **characterised in that** the reactive cross-linking component contains an isocyanate which is solid at room temperature and/or in particular is selected from the group of diphenylmethane-4,4'-diisocyanate (MDI), triphenylmethane-4,4',4"-triisocyanate, tris(4-isocyanatophenyl) thiophosphate, 1,5-naphthalene diisocyanate (NDI) and/or their isomers, the dimers of 2,4-toluene diisocyanate (TDI) and/or of 1-isocyanato-3-isocyanatomethyl-3,5,5-trimethylcyclohexane (IPDI) and/or their hydrogenation products and/or the trimers of 1-isocyanato-3-isocyanatomethyl-3,5,5-trimethylcyclohexane (IPDI).

20. A process according to any one of the preceding claims, **characterised in that** the isocyanate-reactive starting polymer has an average molecular weight of between 8,000 and 50,000 g/mol, in particular between 10,000 and 30,000 g/mol, in particular
wherein the isocyanate-reactive starting polymer is preferably selected from the group of polyesters, polycaprolactone polyesters, polyethers, polyurethanes, polyamides and polytetrahydrofurans and/or preferably has at least two reactive groups per molecule with reactive hydrogen atoms.

21. A process according to any one of the preceding claims,
**characterised in that** the proportion of isocyanate-reactive starting polymer in the first component is 20 to 100 wt.%, in particular 50 to 95 wt.%.

22. A process according to any one of the preceding claims, **characterised in that** at least one adhesive component is present as a granulate.

23. A process according to any one of the preceding claims, **characterised in that** one or more of the components contains at least one resin, in particular wherein the resin is preferably selected from the group of the aliphatic, cyclic or cycloaliphatic hydrocarbon resins, the terpene phenolic nssins, the coumarone-indene resins, the α-methylstyrene resins, the polymerised tall resin esters and/or the ketone-aldehyde resins and/or in particular wherein the resin is preferably a resin with a low acid number with values of less than 1 mg KOH/g and/or in particular
wherein the proportion of resin in each of one or more components is 0 to 70 wt.%, preferably 5 to 35 wt.%.

24. A process according to any one of the preceding claims, **characterised by** a mixing ratio of the first and second components of between 20:1 and 1:20.

25. Use of a reactive, isocyanate-terminated multicomponent coating and/or adhesive material according to claims 1 to 13 for the gluing of, in particular, foam padding, upholstered furniture and mattresses or for continuous coating purposes such as profile wrapping, wherein application is carried out in particular by spraying, injection, nozzles or rollers.

## Revendications

1. Matériau réactif d'enduction et/ou de collage à terminaison isocyanate à plusieurs composants, qui comprend
(a) comme premier composant, un polymère de base réactif vis-à-vis d'un isocyanate ayant une masse molaire supérieure à 8000 g/mol et
(b) comme second composant, un agent réactif de réticulation à terminaison isocyanate,
le matériau contenant en outre un polymère non réactif vis-à-vis d'un isocyanate, choisi dans le groupe de copolymères éthylène/acétate de vinyle et/ou de polyoléfines.

2. Matériau d'enduction et/ou de collage à plusieurs composants suivant la revendication 1, **caractérisé en ce que** les copolymères éthylène/acétate de vinyle ont une teneur en acétate de vinyle comprise entre 12 et 40 %, notamment entre 18 et 28 % et des indices de fusion compris entre 8 et 800, notamment entre 150 et 500.

3. Matériau d'enduction et/ou de collage à plusieurs composants suivant la revendication 1, **caractérisé en ce que** les polyoléfines ont des poids moléculaires moyens Mₙ compris entre 5000 et 25000 g/mol, notamment entre 10000 et 20000 g/mol, et des plages de ramollissement entre 80 et 170°C, notamment entre 80 et 130°C.

4. Matériau d'enduction et/ou de collage à plusieurs composants suivant l'une des revendications précédentes, **caractérisé en ce que** la teneur en polymère non réactif vis-à-vis d'un isocyanate du premier composant va de 5 à 35 % en poids.

5. Matériau d'enduction et/ou de collage à plusieurs composants suivant l'une des revendications précédentes,
**caractérisé en ce que** le composant réactif de réticulation contient un isocyanate solide à la température ambiante, l'isocyanate solide à la température ambiante étant choisi en particulier dans le groupe comprenant le 4,4'-diisocyanato-diphénylméthane (MDI), le 4,4',4"-triisocyanatotriphénylméthane, le tris-(4-isocyanatophényl)-thiophosphate, le 1,5-diisocyanato-naphtalène (NDI) et/ou leurs isomères, les produits de dimérisation du 2,4-diisocyanato-toluène (TDI) et/ou le 1-isocyanato-3-isocyanatométhyl-3,5,5-triméthylcyclohexane (IPDI) et/ou leurs produits d'hydrogénation et/ou les produits de trimérisation du 1-isocyanato-3-isocyanatométhyl-3,5,5-triméthylcyclohexane (IPDI).

6. Matériau d'enduction et/ou de collage à plusieurs composants suivant l'une des revendications précédentes, **caractérisé en ce que** le polymère de base réactif vis-à-vis d'un isocyanate a un poids moléculaire moyen compris entre 8000 et 50000 g/mol, notamment entre 10000 et 30000 g/mol, le polymère de base réactif vis-à-vis d'un isocyanate étant avantageusement choisi dans le groupe de polyesters, de polycaprolactone-polyesters, de polyéthers, de polyuréthannes, de polyamides et de polytétrahydrofurannes et/ou portant avantageusement, par molécule, au moins deux groupes réactifs contenant des atomes réactifs d'hydrogène.

7. Matériau d'enduction et/ou de collage à plusieurs composants suivant l'une des revendications précédentes, **caractérisé en ce que** la proportion de polymère de base réactif vis-à-vis d'un isocyanate dans le premier composant est de 20 à 100 % en poids, notamment de 50 à 95 % en poids.

8. Matériau d'enduction et/ou de collage à plusieurs composants suivant l'une des revendications précédentes, **caractérisé en ce qu'**au moins un composant de collage est présent sous forme de granulat.

9. Matériau d'enduction et/ou de collage à plusieurs composants suivant l'une des revendications précédentes, **caractérisé en ce qu'**un ou plusieurs des composants comportent au moins une résine, cette résine étant choisie en particulier dans le groupe des résines hydrocarbonées aliphatiques, cycliques ou cycloaliphatiques, des résines terpène-phénol, des résines coumarone-indène, des résines d'α-méthylstyrène, des esters polymérisés de résine d'huile de pin et des résines cétone-aldéhyde et/ou étant une résine de faible indice d'acidité ayant des valeurs inférieures à à 1 mg de KOH/g et/ou notamment la proportion de résine en un ou plusieurs composants est dans chaque cas de 0 à 70 % en poids, de préférence de 5 à 35 % en poids.

10. Matériau d'enduction et/ou de collage à plusieurs composants suivant l'une des revendications précédentes, **caractérisé en ce que** le rapport de mélange des premier et second composants est compris entre 20:1 et 1:20.

11. Matériau d'enduction et/ou de collage à plusieurs composants suivant l'une des revendications précédentes,
**caractérisé en ce qu'**au moins l'un des composants contient au moins un autre additif connu pour colles réactives, en particulier un plastifiant, tel qu'un plastifiant à base d'acide phtalique ou d'acide phosphorique, l'acétate de glycol, des huiles organiques de haut point d'ébullition, des esters ou d'autres additifs servant à la plastification, des agents stabilisants, des antioxydants, des accepteurs d'acides et/ou des agents de protection contre le vieillissement.

12. Matériau réactif d'enduction et/ou de collage à terminaison isocyanate à plusieurs composants, contenant un polymère de base réactif vis-à-vis d'un isocyanate ayant une masse molaire supérieure à 8000 g/mol, un agent réactif de réticulation à terminaison isocyanate et un polymère non réactif vis-à-vis d'un isocyanate, choisi dans le groupe des copolymères éthylène/acétate de vinyle et/ou des polyoléfines.

13. Matériau d'enduction et/ou de collage à plusieurs composants suivant la revendication 12, **caractérisé en ce qu'**il est réactif à l'humidité.

14. Procédé de production d'un matériau réactif d'enduction et/ou de collage à terminaison isocyanate à plusieurs composants, en particulier suivant les revendications 1 à 13, **caractérisé par le fait que** le matériau réactif d'enduction et/ou de collage à plusieurs composants est produit en continu par mélange des composants individuels et leur échauffement avec poursuite du mélange jusqu'au passage à l'état liquide, procédé dans lequel
(a) un premier composant comprend un polymère de base réactif vis-à-vis d'un isocyanate, ayant une masse molaire supérieure à 8000 g/mol, et
(b) un second composant comprend un agent réactif de réticulation à terminaison isocyanate
et le matériau d'enduction et/ou de collage à plusieurs composants résultant contient en outre un polymère non réactif vis-à-vis d'un isocyanate, choisi dans le groupe des copolymères éthylène/acétate de vinyle et/ou des polyoléfines,
et le matériau réactif d'enduction et/ou de collage à plusieurs composants résultant est envoyé immédiatement après sa production, en vue de son utilisation, le cas échéant en passant par des récipients intermédiaires, à une installation de revêtement de profilés ou une installation d'enduction.

15. Procédé de production d'un matériau réactif d'enduction et/ou de collage à terminaison isocyanate à plusieurs composants, en particulier suivant l'une des revendications 1 à 13,
**caractérisé en ce que**
le matériau réactif d'enduction et/ou de collage à plusieurs composants est produit en continu par mélange à chaud des composants individuels avec poursuite du mélange jusqu'au passage à l'état liquide,
procédé dans lequel
(a) un premier composant comprend un polymère de base réactif vis-à-vis d'un isocyanate ayant une masse molaire supérieure à 8000 g/mol et
(b) un second composant comprend un agent réactif de réticulation à terminaison isocyanate et le matériau d'enduction et/ou de collage à plusieurs composants contient en outre un polymère non réactif vis-à-vis d'un isocyanate choisi dans le groupe des copolymères éthylène/acétate de vinyle et/ou des polyoléfines,
et le matériau réactif d'enduction et/ou de collage à plusieurs composants résultant est appliqué immédiatement après sa production, le cas échéant en passant par des récipients intermédiaires, par projection, pulvérisation, application au jet ou application au rouleau.

16. Procédé suivant l'une des revendications précédentes, **caractérisé en ce que** la teneur en polymère non réactif vis-à-vis d'un isocyanate du premier composant se situe de préférence entre 5 et 35 % en poids.

17. Procédé suivant l'une des revendications précédentes, **caractérisé en ce que** les copolymères éthylène/acétate. de vinyle ont une teneur en acétate de vinyle comprise entre 12 et 40 %, notamment entre 18 et 28 % en poids et des indices de fusion entre 8 et 800, notamment entre 150 et 500.

18. Procédé suivant l'une des revendications précédentes, **caractérisé en ce que** les polyoléfines ont des poids moléculaires moyens Mₙ compris entre 5000 et 25000 g./mol, notamment entre 10000 et 20000 g/mol et des plages de ramollissement entre 80 et 170°C, notamment entre 80 et 130°C.

19. Procédé suivant l'une des revendications précédentes, **caractérisé en ce que** le composant réactif de réticulation contient un isocyanate solide à la température ambiante et/ou est choisi en particulier dans le groupe du 4,4'-diisocyanatodiphénylméthane (MDI), du 4,4',4"-triisocanato-triphénylméthane, du tris-(4-isocyanatophényl)-thiophosphate, du 1,5-diisocyanato-naphtalène (NDI) et/ou de leurs isomères, des produits de dimérisation du 2,4-diisocyanato-toluène (TDI) et/ou du 1-isocyanato-3-isocyanatométhyl-3,5,5-triméthyl-cyclohexane (IPDI) et/ou de leurs produits d'hydrogénation et/ou des produits de trimérisation du 1-isocyanato-3-isocyanatométhyl-3,5,5-triméthyl-cycloheane (IPDI).

20. Procédé suivant l'une des revendications précédentes, **caractérisé en ce que** le polymère de base réactif vis-à-vis d'un isocyanate a un poids moléculauire moyen compris entre 8000 et 50000 g/mol, notamment entre 10000 et 30000 g/mol, ce polymère de base réactif vis-à-vis d'un isocyanate étant choisi en particulier dans le groupe de polyesters, de polycaprolactone-polyesters, de polyuréthannes, de polyamides et de polytétrahydrofurannes et/ou portant, par molécule, au moins deux groupes réactifs contenant des atomes d'hydrogène réactifs.

21. Procédé suivant l'une des revendications précédentes, **caractérisé en ce que** la proportion de polymère de base réactif vis-à-vis d'un isocyanate dans le premier composant va de 20 à 100 % en poids, notamment de 50 à 95 % en poids.

22. Procédé suivant l'une quelconque des revendications précédentes, **caractérisé en ce qu'**au moins un composant de collage est présent comme granulat.

23. Procédé suivant l'une des revendications précédentes, **caractérisé en ce qu'**un ou plusieurs des composants comportent au moins une résine, cette résine étant avantageusement choisie en particulier dans le groupe des résines hydrocarbonées aliphatiques, cycliques ou cycloaliphatiques, des résines terpène-phénol, des résines coumarone-indène, des résines d'α-méthylstyrène, des esters polymérisés de résine d'huile de pin et/ou des résines cétone-aldéhyde et/ou ayant avantageusement un faible indice d'acidité avec des valeurs inférieures à 1 mg de KOH/g et/ou, en particulier, la proportion de résine en un ou plusieurs composants s'élève dans chaque cas à une valeur de 0 à 70 % en poids, notamment à une valeur de 5 à 35 % en poids.

24. Procédé suivant l'une des revendications précédentes, **caractérisé par** un rapport de mélange des premier et second composants compris entre 20:1 et 1:20.

25. Utilisation d'un matériau réactif d'enduction et/ou de collage à terminaison isocyanate à plusieurs composants suivant les revendications 1 à 13 pour le collage en particulier de coussins en mousse, de meubles capitonnés et de matelas, ou à des fins de revêtement continu de profilés, l'application étant effectuée en particulier par projection, pulvérisation, application au jet ou application au rouleau.
